# EUROPÄISCHE PATENTANMELDUNG

(11) **EP 3 016 215 A1**
(43) Veröffentlichungstag der Anmeldung: **04.05.2016**
(21) Anmeldenummer: 15190896.9
(22) Anmeldetag: 21.10.2015
(51) Int. Cl.: H01R 13/64, H01R 9/26, H01R 4/66, H01R 4/36, F16B 41/00

(54) **ERDUNGSSCHIENENVORRICHTUNG**

(30) Priorität: 31.10.2014 DE 202014105219 U
(71) Anmelder: Hora-werk Gmbh, Bünde 32257 (DE)
(72) Erfinder: NIESTRAT, Dirk, 32584 Löhne (DE); HOLTMANN, Rald, 32257 Bünde (DE)
(74) Vertreter: Werner & ten Brink

(57) **Zusammenfassung**

Die Erfindung betrifft eine Erdungsschienenvorrichtung (10) mit einer Erdungsschiene (12) und zumindest einem, die Erdungsschiene (12) tragenden Sockel (14), bei der Zentrierungsmittel (28, 30) der Erdungsschiene (12) und des oder jedes Sockels (14) eine Zugänglichkeit auch von im Bereich eines Sockels (14) befindlichen Leitereinführöffnungen (16) der Erdungsschiene (12) gewährleisten, indem aufgrund der Zentrierungsmittel (28, 30) jederzeit jede im Sockel (14) zum Einführen elektrischer Leiter bestimmte seitliche Öffnung (26) mit einer Leitereinführöffnung (16) der Erdungsschiene (12) fluchtet.

## Beschreibung

Die Erfindung betrifft eine Vorrichtung zum Anschließen einer Mehrzahl von elektrischen Leitern, wobei alle an die Vorrichtung angeschlossenen Leiter durch die Vorrichtung elektrisch leitend miteinander verbunden sind. Solche Vorrichtungen sind an sich bekannt, zum Beispiel aus der US 8,480,414 B2, und werden zum Beispiel zum "Erden" einer Mehrzahl von Leitern, also zum Anschluss der Leiter an ein Massepotential verwendet.

Solche Vorrichtungen umfassen einen metallischen und elektrisch leitenden, üblicherweise langgestreckten Klemmkörper, in dem sich entlang von dessen Längserstreckung nebeneinander jeweils quer zur Längserstreckung des Klemmkörpers durchgehende Bohrungen oder zumindest Einführöffnungen für elektrische Leiter befinden. Der Klemmkörper wird entsprechend seiner Geometrie oftmals auch als Schiene bezeichnet. Entsprechend werden bekannte Vorrichtungen mit einem solchen Klemmkörper oftmals als PE-Schiene oder PEN-Schiene bezeichnet (PE: protective earth = Schutzleiter; PEN: protective earth neutral). Allgemein wird eine solche Schiene auch als Erdungsschiene bezeichnet und auf dieser Basis wird die hier vorgeschlagene Vorrichtung im Folgenden - allerdings ohne Verzicht auf eine weitergehende Allgemeingültigkeit, denn mittels des Klemmkörpers kann auch ein Bezug auf jedes andere Potential erreicht werden - als Erdungsschienenvorrichtung bezeichnet.

Ein Problem bekannter Erdungsschienen besteht darin, dass bei deren Anbringung mittels eines Sockels, wobei der Sockel oder ein Sockelpaar die Erdungsschiene trägt und der oder jeder Sockel seinerseits an einer Grundplatte oder dergleichen, zum Beispiel einer Grundplatte eines Schaltschranks oder Sicherungskastens, angebracht ist, Kontaktstellen der Erdungsschiene durch den Sockel verdeckt werden und entsprechend nicht mehr zum Anschluss elektrischer Leiter zur Verfügung stehen.

Ein weiteres Problem bekannter Erdungsschienen besteht darin, dass diese nur mit einer durch eine jeweilige Bauform bestimmten Anzahl von Anschlussstellen zur Verfügung stehen. Somit müssen oftmals Erdungsschienen mit einer größeren Anzahl von Anschlussstellen verwendet werden, als tatsächlich benötigt werden. Dies ist zum einen hinsichtlich des damit einhergehenden Platzbedarfs der Erdungsschienenvorrichtung ungünstig. Zum anderen wird aufgrund der unbenutzten Anschlussstellen unnötig Material verwendet.

Aus der DE 697 15 317 T2 ist eine gattungsgemäße Vorrichtung mit einer zum Beispiel als Erdungsschiene fungierenden Anschlussleiste bekannt, bei der sich auch eine fluchtende Justierung der Öffnungen in einem Wandelement eines Trägers mit Leitereinführöffnungen der Anschlussleiste ergibt. Dies wird allerdings nicht mittels einerseits im Träger und andererseits in der Anschlussleiste gebildeter Zentrierungsmittel erreicht, sondern durch Aufsetzen einer die Anschlussleiste in ihrer Gesamtheit übergreifenden Kappe. Die Länge der Kappe passt dabei zur Länge der Anschlussleiste und die auf den Träger aufgesetzte Kappe fixiert in ihrem Innern die Anschlussleiste in Längsrichtung auf dem Träger. Auf diese Weise sind nur solche Anschlussleisten in Längsrichtung fixierbar, für die Kappen mit einer entsprechenden Länge vorhanden sind. Ein bedarfsweises Kürzen einer Anschlussleiste auf eine Länge, für die keine Kappe vorhanden ist, ist nicht sinnvoll, weil dann keine axiale Fixierung möglich und keine fluchtende Ausrichtung der Leitereinführöffnungen der Anschlussleiste und der Öffnungen im Wandelement gewährleistet ist.

Eine Aufgabe der vorliegenden Erfindung besteht entsprechend darin, eine Erdungsschienenvorrichtung der eingangs genannten Art anzugeben, bei welcher der Klemmkörper, nämlich eine Anzahl darin gebildeter Anschlussstellen, an einen jeweiligen Bedarf anpassbar ist und bei welcher jede im Klemmkörper gebildete Kontaktstelle zum Anschluss elektrischer Leiter zur Verfügung steht. Diese Aufgabe wird erfindungsgemäß mittels einer Erdungsschienenvorrichtung der eingangs genannten Art mit den Merkmalen des Anspruchs 1 gelöst. Dazu ist bei einer Erdungsschienenvorrichtung mit einer Erdungsschiene und zumindest einem, die Erdungsschiene tragenden Sockel, wobei die Erdungsschiene entlang ihrer Längserstreckung nebeneinander eine Mehrzahl von jeweils quer zur Längserstreckung orientierten Leitereinführöffnungen aufweist und wobei die Erdungsschiene bedarfsweise gekürzt werden kann, Folgendes vorgesehen: Der oder jeder Sockel weist zur Aufnahme eines Abschnitts der Erdungsschiene eine formschlüssig auf eine Querschnittskontur der Erdungsschiene abgestellte Ausnehmung auf. Diese Ausnehmung ist beidseitig durch Wandelemente des Sockels begrenzt. Die Wandelemente sind zur rastenden Arretierung der Erdungsschiene in der Ausnehmung wirksam, halten also die in die Ausnehmung eingeführte und dort verrastete Erdungsschiene in der Ausnehmung und damit am Sockel. Zumindest eines der Wandelemente weist zumindest eine durchgehende Öffnung auf, die bei einer in der Ausnehmung platzierten Erdungsschiene bis zur Erdungsschiene reicht. Zur Justierung der Erdungsschiene relativ zum Sockel, genauer zur Justierung zumindest einer Leitereinführöffnung der Erdungsschiene relativ zum Sockel, weisen einerseits die Ausnehmung und andererseits die Erdungsschiene korrespondierende Zentrierungsmittel auf, zum Beispiel in Form von zumindest einer Rippe auf Seiten der Ausnehmung und in Form einer korrespondierenden Rille in der Erdungsschiene.

Die Zugänglichkeit jeder Leitereinführöffnung und damit deren Verwendbarkeit zum Anschließen elektrischer Leiter wird dabei dadurch gewährleistet, dass bei einer in der Ausnehmung eines Sockels platzierten Erdungsschiene und bei in Eingriff befindlichen Zentrierungsmitteln die zumindest eine Öffnung des Wandelements mit einer Leitereinführöffnung der Erdungsschiene fluchtet. Die oder jede Öffnung im Wandelement erlaubt also das Hindurchführen eines elektrischen Leiters und das Einführen des elektrischen Leiters in die fluchtend hinter der Öffnung liegende Leitereinführöffnung der Erdungsschiene, so dass jede im Bereich des Wandelements des Sockels liegende Leitereinführöffnung weiterhin zum Anschließen elektrischer Leiter zugänglich und verwendbar bleibt.

Bei einer von der vorliegenden Erfindung ausgehenden patentamtlichen Recherche sind ferner die DE 691 08 658 T2 und die DE 692 12 395 T2 ermittelt worden, aus denen Vorrichtungen mit einer zum Beispiel als Erdungsschiene fungierenden Anschlussleiste bekannt sind. Dort kommt es nicht auf eine fluchtende Ausrichtung von Gehäuseöffnungen und Leitereinführöffnungen der Anschlussleiste, sondern auf die beidseitige Anbringung mehrerer Anschlussleisten in paralleler Ausrichtung zwischen zwei Trägern an. Zu diesem Zweck ist in jedem Träger ein Rastelement und in jeder Anschlussleiste beidseitig eine Ausnehmung für das Rastelement vorgesehen. Mit der damit möglichen Verrastung einer Anschlussleiste an jeweils einem Träger sind auch die Träger zueinander fixiert. Bei mehreren derart fixierten Anschlussleisten ergibt sich eine biegesteife Verbindung der Anschlussleisten und der Träger. Ein bedarfsweises Kürzen einer Anschlussleiste ist nicht möglich, denn die zwei oder mehr von der Vorrichtung umfassten Anschlussleisten müssen alle dieselbe Länge aufweisen, damit jede Anschlussleiste beidseitig mit den Trägern verbunden werden kann.

Vorteilhafte Ausgestaltungen der Erdungsschienenvorrichtung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Bei einer Ausführungsform der Erdungsschienenvorrichtung ist mit einem Sockel ein Deckelelement rastend verbindbar, wobei das Deckelelement Mittel zum unverlierbaren Halten von Klemmschrauben aufweist, die zum Eindrehen in Klemmschraubenbohrungen der Erdungsschiene bestimmt sind. Solche Klemmschrauben sind in an sich bekannter Art zur Fixierung eines in eine Leitereinführöffnung der Erdungsschiene eingeführten elektrischen Leiters vorgesehen. Für einen Verwender der Erdungsschienenvorrichtung wäre das sukzessive Eindrehen jeweils einer Klemmschraube in eine Klemmschraubenbohrung der Erdungsschiene mühsam. Indem eine Mehrzahl von Klemmschrauben in einem mit der Erdungsschienenvorrichtung verbindbaren Deckelelement unverlierbar gehalten ist, kann diese Mehrzahl von Klemmschrauben mittels des Deckelelements derart relativ zu der Erdungsschiene positioniert werden, dass ein unkompliziertes Einschrauben jeder Klemmschraube in jeweils eine Klemmschraubenbohrung der Erdungsschiene möglich ist. Dafür wird das Deckelelement mit den darin befindlichen Klemmschrauben mit der Erdungsschienenvorrichtung verbunden. Dies kann zum Beispiel im Wege einer rastenden oder einer sonstigen lösbaren Verbindung mit einem Sockel oder im Wege einer Verbindung mit einem bereits mit einem Sockel verbundenen Deckelelement geschehen. Die unmittelbare oder mittelbare Verbindung mit einem Sockel bewirkt eine das Eindrehen der Klemmschrauben erlaubende Relativposition des Deckelelements zur Erdungsschiene, weil sich der Sockel und die Erdungsschiene aufgrund der Justiermittel selbst in einer vorgegebenen Relativposition befinden. Die rastende Verbindung des Deckelelements mit einem Sockel der Erdungsschienenvorrichtung bewirkt zudem eine zusätzliche Sicherung der in der Ausnehmung des Sockels gehaltenen Erdungsschiene.

Bei einer besonderen Ausführungsform dieser Variante der Erdungsschienenvorrichtung weist das Deckelelement in seinem Innern unterhalb der Mittel zum unverlierbaren Halten der Klemmschrauben eine lichte Höhe auf, die bei einem mit der Erdungsschienenvorrichtung verbundenen Deckelelement eine Aufnahme von in die Erdungsschiene eingeschraubten Klemmschrauben erlaubt. Die Erdungsschiene kann also - wie oben beschrieben - unter Zuhilfenahme des Deckelelements und dort gehaltener Klemmschrauben mit den Klemmschrauben versehen werden oder bereits in die Klemmschraubenbohrungen eingedrehte Klemmschrauben umfassen. Für die Situation von bereits in die Klemmschraubenbohrungen eingedrehten Klemmschrauben ermöglicht die im Innern des Deckelelements freibleibende lichte Höhe das Anbringen eines Deckelelements auch an einer solchermaßen vorbestückten Erdungsschiene. Das Deckelelement ist dabei für beide Situationen verwendbar. Mittels eines Deckelelements, das von oben über bereits in die Klemmschraubenbohrungen eingedrehte Klemmschrauben anbringbar ist, ist zum Beispiel auch eine bereits benutzte Erdungsschienenvorrichtung gewissermaßen nachträglich oder während der Montage in eine fingersichere Konfiguration umwandelbar.

Bei einer weiteren Ausführungsform der Erdungsschienenvorrichtung sind jeweils zwei Deckelelemente mittels eines Anreihprofils lösbar miteinander verbindbar. Eine jeweilige "Breite" (quer zur Längsachse/-richtung der Erdungsschiene gesehen) der Erdungsschienenvorrichtung ist grundsätzlich nicht begrenzt und wird vom Monteur durch geeignetes Ablängen der Erdungsschiene entsprechend dem jeweiligen Bedarf, also entsprechend dem jeweiligen Bedarf von Anschlussstellen/Leitereinführöffnungen, von Anwendungsfall zu Anwendungsfall ausgewählt. Indem jeweils zwei Deckelelemente mittels eines Anreihprofils lösbar miteinander verbindbar sind, können zwei oder mehr Deckelelemente so miteinander verbunden werden, dass eine Abdeckung der Erdungsschiene resultiert. Dafür können Deckelelemente mit unterschiedlichen Breiten (ebenfalls quer zur Längsrichtung der Erdungsschiene gesehen) vorgesehen sein. Bei einer die Überdeckung genau einer Leitereinführöffnung der Erdungsschiene erlaubenden Breite kann mittels einer entsprechenden Vielzahl von Deckelelementen jede Breite der Erdungsschienenvorrichtung abgedeckt werden. Deckelelemente mit einer solchen minimalen Breite sind in der Praxis nur begrenzt sinnvoll. Bei einer besonderen Ausführungsform der Erdungsschienenvorrichtung sind daher breite und schmale Deckelelemente vorgesehen, wobei jedes schmale Deckelelement eine Überdeckung von zumindest zwei oder drei Leitereinführöffnung der Erdungsschiene erlaubt. Jedes breite Deckelelement erlaubt demgegenüber eine Überdeckung einer im Vergleich zu der von einem schmalen Deckelelement überdeckten Anzahl von Leitereinführöffnung größere Anzahl von Leitereinführöffnung. Bei einer speziellen Ausführungsform ist vorgesehen, dass ein schmales Deckelelement eine Überdeckung von drei Leitereinführöffnungen und ein breites Deckelelement eine Überdeckung von sieben Leitereinführöffnungen erlaubt. Es hat sich herausgestellt, dass diese Breiten eine ausreichende Flexibilität bei der Abdeckung unterschiedlich langer Erdungsschienen (3; 3+3=6; 7; 3+3+3=9; 3+7=10; 3+3+3+3=12; 7+7=14 usw.) gewährleisten.

Bei einer nochmals weiteren Ausführungsform der Erdungsschienenvorrichtung umfasst das oder jedes direkt oder indirekt mit einem Sockel verbundene Deckelelement die Erdungsschiene fingersicher. Eine elektrische Einrichtung ist bekanntlich fingersicher, wenn es unmöglich ist, mit den Fingern unter Spannung stehende Kontaktflächen der Einrichtung zu berühren. Die im angebrachten Zustand auf beiden Seiten der Erdungsschiene vor oder über den Leitereinführöffnungen befindlichen Abschnitte des oder jedes Deckelelements haben dazu eine Geometrie/Dimension, die diese Fingersicherheit gewährleistet.

Die mit der Anmeldung eingereichten Ansprüche sind Formulierungsvorschläge ohne Präjudiz für die Erzielung weitergehenden Schutzes. Da speziell die Gegenstände der Unteransprüche im Hinblick auf den Stand der Technik am Prioritätstag eigene und unabhängige Erfindungen bilden können, behält die Anmelderin sich vor, diese oder noch weitere, bisher nur in der Beschreibung und/oder Zeichnung offenbarte Merkmalskombinationen zum Gegenstand unabhängiger Ansprüche oder Teilungserklärungen zu machen. Sie können weiterhin auch selbständige Erfindungen enthalten, die eine von den Gegenständen der vorhergehenden Unteransprüche unabhängige Gestaltung aufweisen.

Nachfolgend wird ein Ausführungsbeispiel der erfindungsgemäßen Erdungsschiene anhand der Zeichnung näher erläutert. Einander entsprechende Gegenstände oder Elemente sind in allen Figuren mit den gleichen Bezugszeichen versehen.

Das oder jedes Ausführungsbeispiel ist nicht als Einschränkung der Erfindung zu verstehen. Vielmehr sind im Rahmen der vorliegenden Offenbarung durchaus Abänderungen und Modifikationen der Erdungsschiene möglich, insbesondere solche Varianten, Elemente und Kombinationen und/oder Materialien, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen, auch soweit sie Herstell- und Arbeitsverfahren betreffen.

Es zeigen
- Fig. 1 und Fig. 2: Erdungsschienenvorrichtungen mit unterschiedlichen Sockeln und eine davon jeweils getragene Erdungsschiene,
- Fig. 1A und Fig. 2A: die Erdungsschienenvorrichtungen aus Fig. 1, Fig. 2 ohne Bezugsziffern,
- Fig. 3: einen Abschnitt der Erdungsschienenvorrichtung im Längsschnitt,
- Fig. 4: die Erdungsschienenvorrichtung mit als Berührungsschutz fungierenden Deckelelementen,
- Fig. 5: einen Querschnitt durch die Erdungsschienenvorrichtung zur Illustration, dass eine Anbringung eines Deckelelements auch bei bereits in die Erdungsschiene eingedrehten Klemmschrauben noch möglich ist und
- Fig. 6: einen Querschnitt wie in Fig. 5 zur Illustration einer unverlierbaren Halterung von Klemmschrauben in einem Deckelelement,
- Fig. 7: die Erdungsschienenvorrichtung mit angebrachten Deckelelementen,
- Fig. 8: die Erdungsschienenvorrichtung gemäß Fig. 7 mit seitlich angebrachten Seitenteilen,

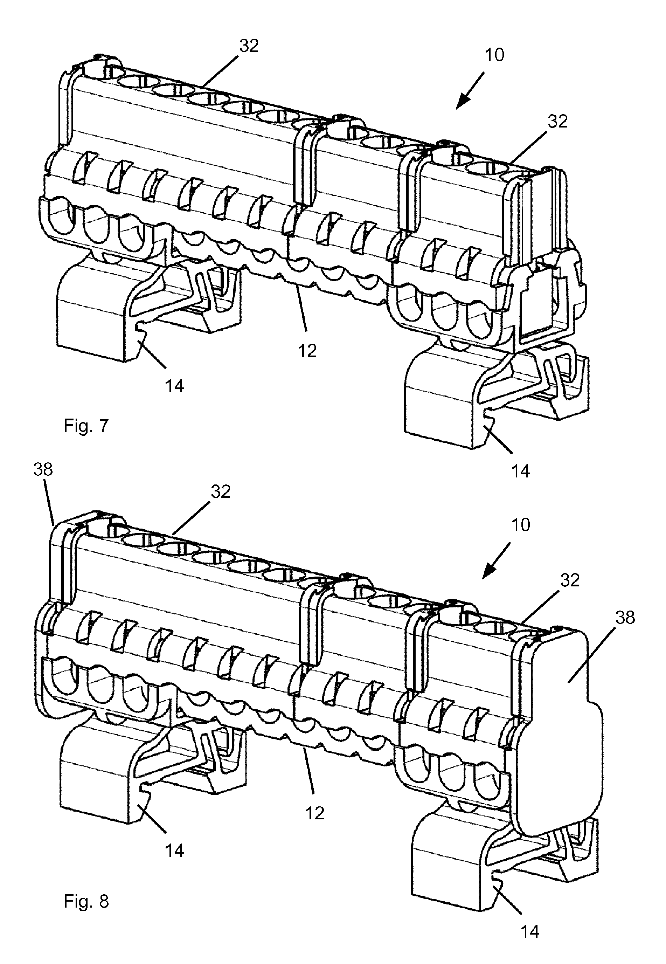

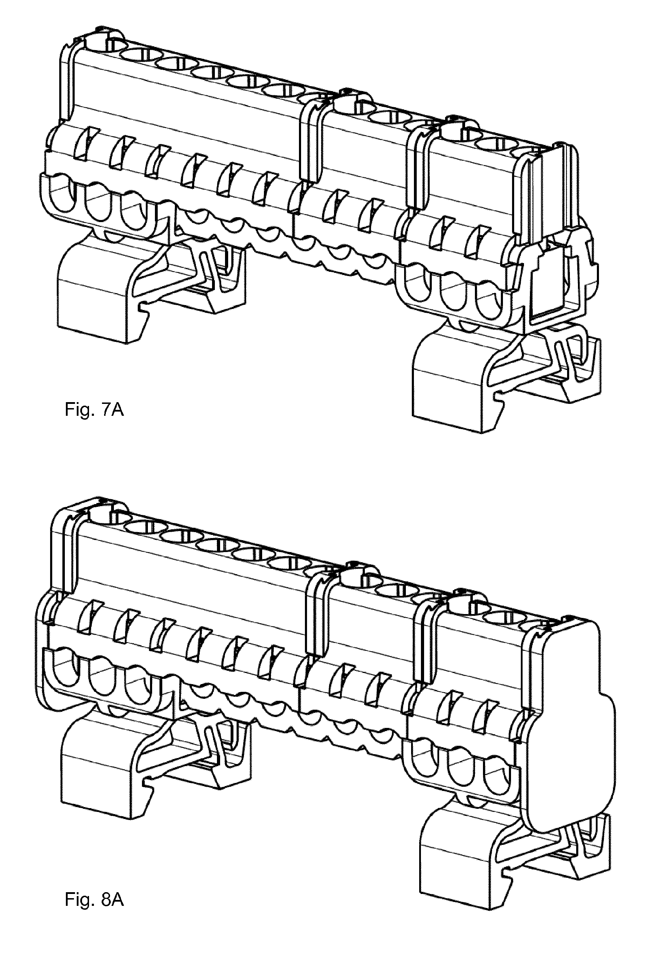

- Fig. 7A und FIG 8A: die Erdungsschienenvorrichtung aus Fig. 7 bzw. Fig. 8 ohne Bezugsziffern,

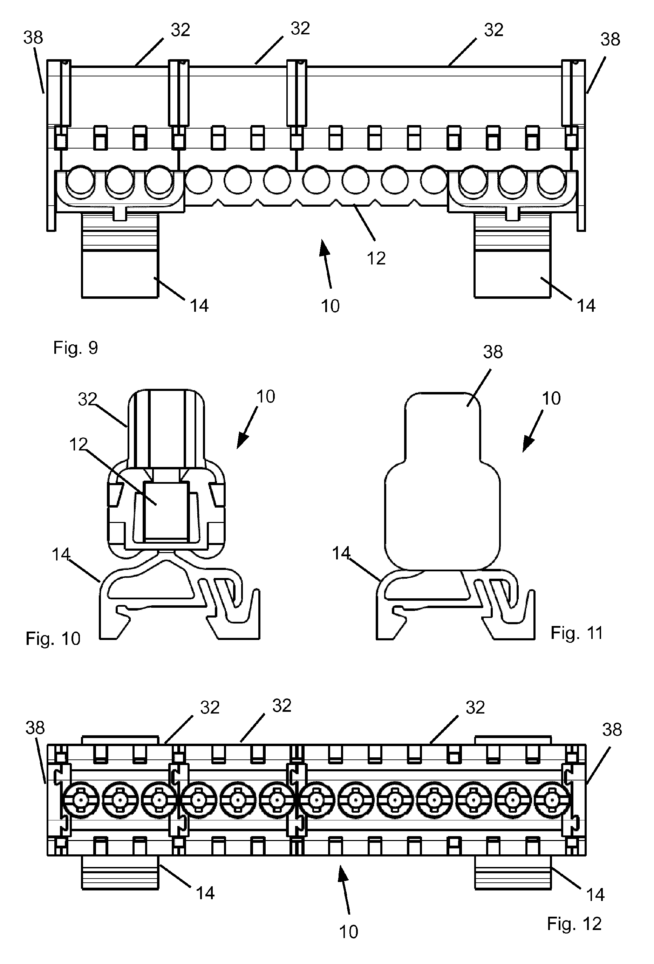

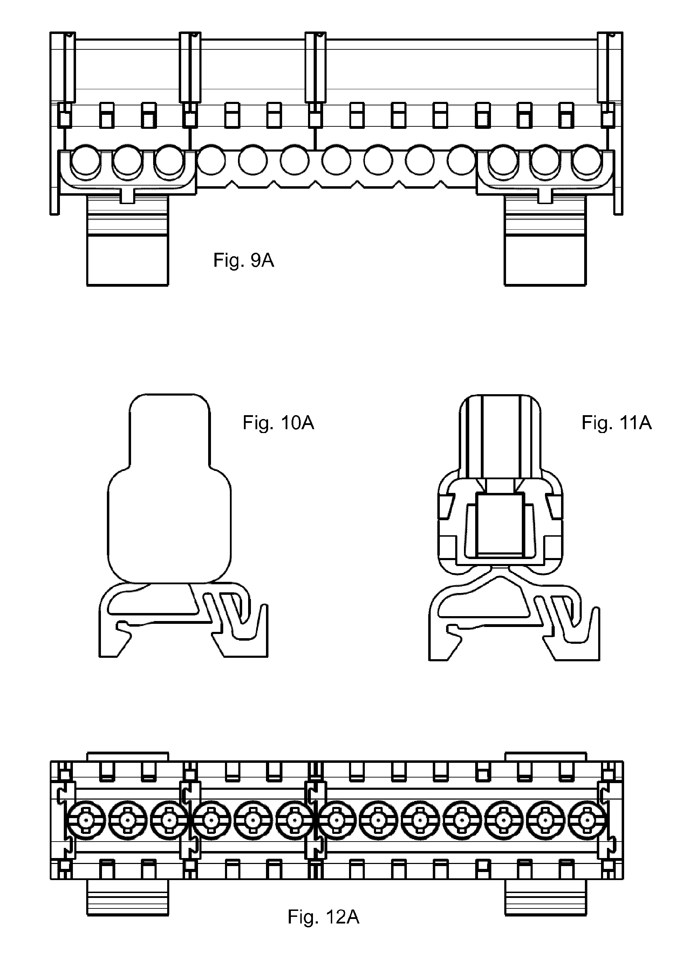

- Fig. 9 bis Fig. 12: die Erdungsschienenvorrichtung aus unterschiedlichen Blickrichtungen sowie
- Fig. 9A bis FIG 12A: die Erdungsschienenvorrichtung aus Fig. 9 bis Fig. 12 ohne Bezugszififern.

Die Darstellungen zeigen eine Ausführungsform einer erfindungsgemäßen Erdungsschienenvorrichtung 10. Diese umfasst eine Erdungsschiene 12 sowie zumindest einen Sockel 14 zum Halten der Erdungsschiene 12. Bei der Erdungsschiene 12 handelt es sich um einen metallischen Klemmkörper und die Erdungsschiene 12 ist entsprechend in an sich bekannter Art und Weise aus einem metallischen, elektrisch leitenden Material gefertigt und umfasst in ebenfalls an sich bekannter Art und Weise eine Mehrzahl von entlang der Längserstreckung der Erdungsschiene 12 quer zur Längserstreckung der Erdungsschiene 12 ausgerichtete Leitereinführöffnungen 16 zum Einführen von in den Figuren nicht gezeigten elektrischen Leitern. Der Verwender der Erdungsschienenvorrichtung 10 kann eine jeweilige Länge der Erdungsschiene 12, also eine Anzahl der Leitereinführöffnungen 16 und damit die Anzahl der an die Erdungsschiene 12 anschließbaren Leiter, entsprechend einem jeweiligen Bedarf wählen und dafür eine jeweils benötigte Länge von einem größeren Stück abnehmen. Zum Fixieren elektrischer Leiter an der Erdungsschiene 12 sind in ebenfalls an sich bekannter Art und Weise Klemmschrauben 18 vorgesehen. Die Klemmschrauben 18 befinden sich in in der Erdungsschiene 12 quer zu den Leitereinführöffnungen 16 gebildeten Klemmschraubenbohrungen und sind in an sich bekannter Art und Weise in ein dortiges Gewinde eingedreht oder eindrehbar. Alle an die Erdungsschiene 12 angeschlossenen Leiter befinden sich elektrisch auf demselben Potential. Daher kommt die Erdungsschienenvorrichtung 10 auch - aber nicht ausschließlich - zur Erdung von Geräten, Schaltelementen und dergleichen oder zur Vorgabe eines definierten Bezugspotentials für einen Stromkreis in Betracht.

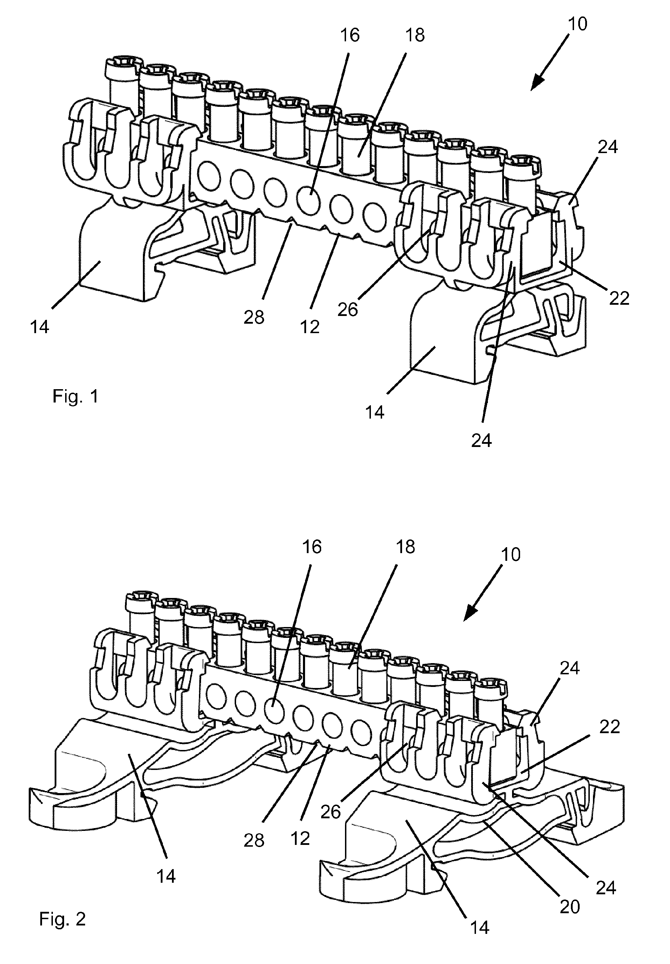

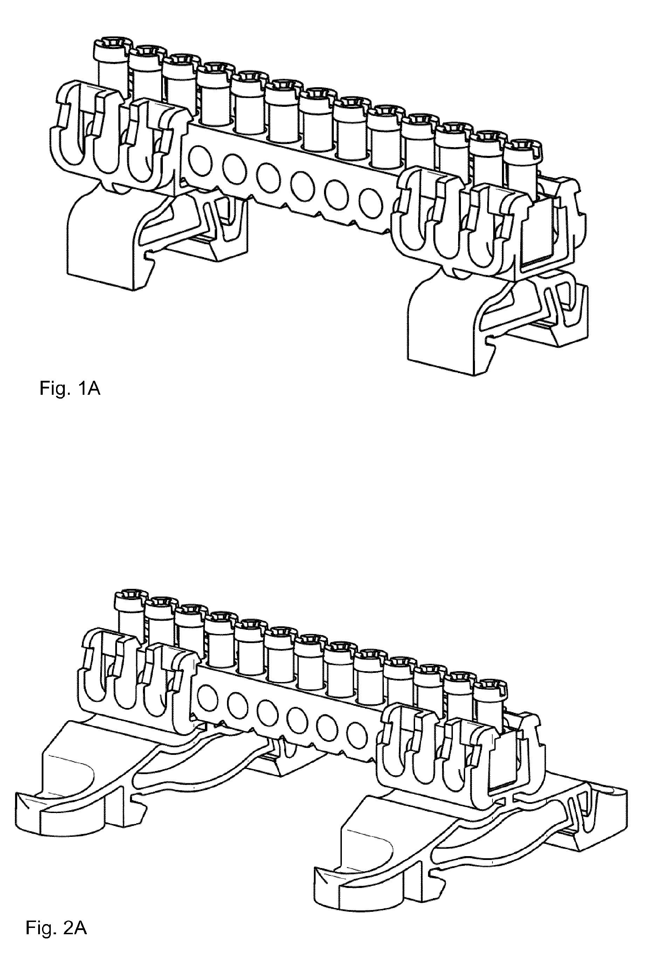

Bei der in Figur 1 gezeigten Variante der Erdungsschienenvorrichtung 10 erlauben deren Sockel 14 eine Anbringung an einer Profilschiene, zum Beispiel einer Hutschiene oder dergleichen. Jeder Sockel 14 weist dafür einseitig ein Profil zum Einhängen in die Profilschiene und gegenüberliegend ein Federelement zum lösbaren Verbinden mit der Profilschiene auf.

Bei der in Figur 2 gezeigten Variante der Erdungsschienenvorrichtung 10 erlauben deren Sockel 14 eine Anbringung an einer Grundplatte oder dergleichen, zum Beispiel einer Grundplatte eines Schaltschranks oder Sicherungskastens, oder auf einer Grundfläche. Jeder Sockel 14 weist dafür zumindest eine Anschlussstelle zum Fixieren des Sockels 14 mittels einer Schraube oder dergleichen auf. Bei der gezeigten Ausführungsform ist speziell eine Variante dargestellt, bei der seitlich offene Anschlussstellen auch eine Fixierung an bereits zum Teil in die jeweilige Grundplatte/-fläche eingedrehten Schrauben erlauben. Zudem ist der Sockel 14 in seinem mittleren Teil in einer Art und Weise ausgeführt, die einen Toleranzausgleich und/oder eine federnde Lagerung der Erdungsschiene 12 erlaubt. Dafür umfasst jeder Sockel 14 im mittleren Bereich zumindest einen im Rahmen der jeweiligen Materialeigenschaften flexiblen Steg 20. Bei einer mit zumindest zwei Sockeln 14 gehaltenen Erdungsschiene 12 ermöglicht dieser Steg 20 auch die Anbringung auf einer nicht exakt ebenen Grundfläche/-platte. Bei einer Anbringung der Erdungsschienenvorrichtung 10 an einer Profilschiene (Figur 1) ist ein solcher Toleranzausgleich aufgrund der Profilschiene nicht notwendig.

Bei der in Figur 1 und Figur 2 gezeigten Erdungsschienenvorrichtung 10 ist erkennbar, dass sich die Erdungsschiene 12 in jedem Sockel 14 abschnittsweise in einer dortigen, formschlüssig auf eine Querschnittskontur der Erdungsschiene 12 abgestellten Ausnehmung 22 befindet. Die Ausnehmung 22 wird in jedem Sockel 14 seitlich durch zwei Wandelemente 24begrenzt. Im Wandelement 24 befindet sich eine der Breite des jeweils abgedeckten Abschnitts der Erdungsschiene 12 entsprechende Anzahl von Öffnungen 26, nämlich eine der Anzahl der jeweils abgedeckten Leitereinführöffnungen 16 entsprechende Anzahl von Öffnungen 26. An der bei der für die Darstellung in Figur 1 und Figur 2 gewählten Blickrichtung sichtbaren Seite jeder Ausnehmung 22 ist erkennbar, dass die Wandelemente 24 zur rastenden Arretierung der Erdungsschiene 12 in der Ausnehmung 22 wirksam sind. Die dargestellte Ausführungsform umfasst dafür am oberen Ende der Wandelemente 24 eine Rastnase.

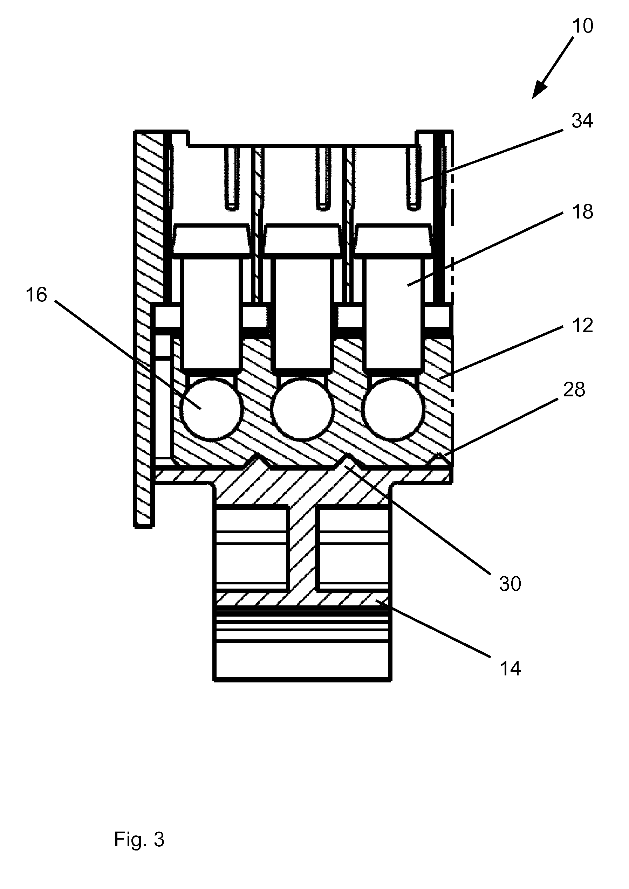

Die Darstellung in Figur 3 zeigt einen Längsschnitt durch einen Teil der Erdungsschienenvorrichtung 10. Erkennbar sind die längsgeschnittene Erdungsschiene 12 und ein Sockel 14. Die Erdungsschiene 12 weist an ihrer Unterseite auch bereits in Figur 1 und Figur 2 erkennbare Rillen 28 auf. Zum Eingriff in diese Rillen 28 weist der Sockel 14 am Boden der Ausnehmung 22 korrespondierende Rippen 30 auf. Diese Rillen 28 und Rippen 30 sind Beispiele für korrespondierende Zentrierungsmittel 28, 30 der Ausnehmung 22 einerseits und der Erdungsschiene 12 andererseits. Andere Zentrierungsmittel 28, 30, zum Beispiel ein kegelförmiger Dom anstelle einer Rippe 30 und eine formschlüssige, kegelförmige Vertiefung anstelle einer Rille 28, und/oder eine andere Position der Zentrierungsmittel, zum Beispiel an einer Seitenfläche der Erdungsschiene 12 und der gegenüberliegenden Innenseite des jeweiligen Wandelements 24, sind ebenfalls denkbar und im Folgenden bei jeder Erwähnung des Begriffs Zentrierungsmittel 28, 30 stets mitzulesen.

Die Zentrierungsmittel 28, 30 bewirken, dass bei einer in der Ausnehmung 22 eines Sockels 14 platzierten Erdungsschiene 12 und bei in Eingriff befindlichen Zentrierungsmitteln 28, 30 die oder jede Öffnung 26 des Wandelements 24 mit einer Leitereinführöffnung 16 bzw. jeweils einer Leitereinführöffnung 16 der Erdungsschiene 12 fluchtet. Auf diese Weise bleiben auch bei einer an einem oder mehreren Sockeln 14 angebrachten Erdungsschiene 12 stets alle Leitereinführöffnungen 16 zugänglich und damit für einen Anschluss elektrischer Leiter verwendbar.

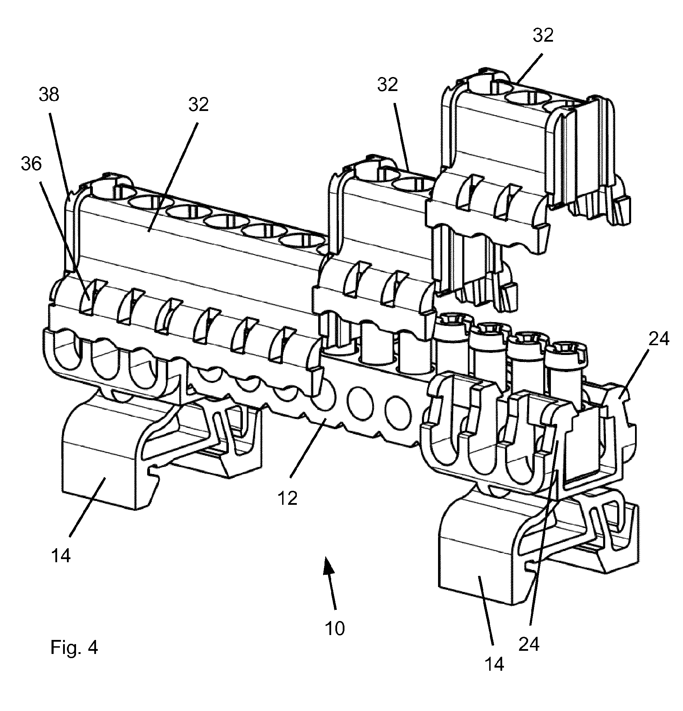

Die Darstellung in Figur 4 zeigt die Erdungsschienenvorrichtung 10 aus Figur 1 (die nachfolgenden Ausführungen gelten genauso für die Erdungsschienenvorrichtung aus Fig. 2) mit einer Mehrzahl von als Berührungsschutz fungierenden Deckelelementen 32. In der Darstellung in Figur 4 und in den folgenden Darstellungen sind nicht immer alle bereits eingeführten Bezugsziffern wiederholt. Insoweit wird auf die jeweils vorangehenden Figuren verwiesen.

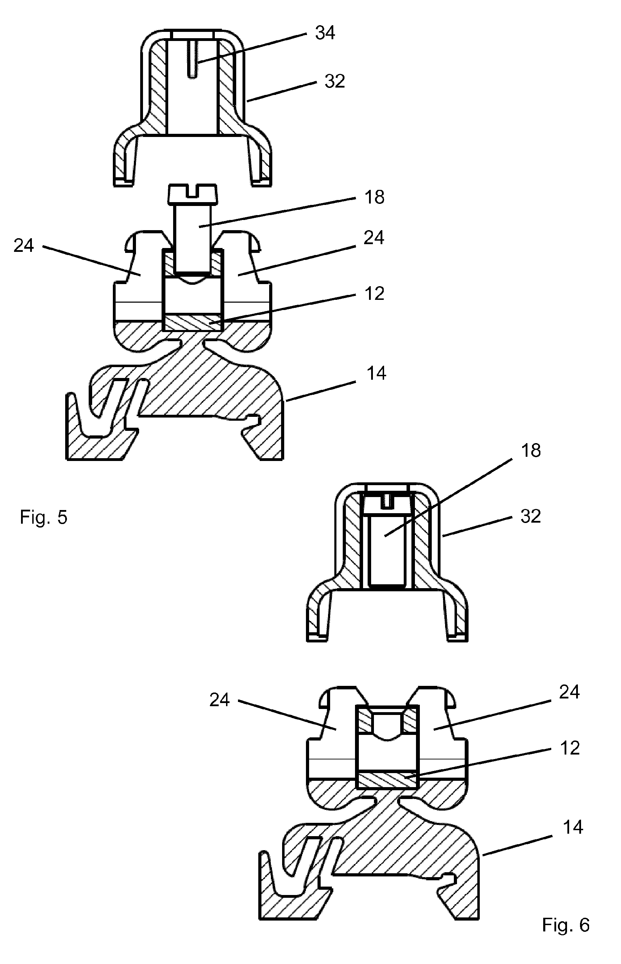

Jedes Deckelelement 32 ist mit einem Sockel 14 rastend lösbar verbindbar. Bei der gezeigten Ausführungsform befinden sich dafür an den Wandelementen 24 gegenüberliegend zu den die Erdungsschiene 12 in der Ausnehmung 22 fixierenden Rastnasen nach außen weisende Rastnasen (siehe auch Fig. 5, Fig. 6), die jeweils in eine im Deckelelement 32 gebildete Gegenkontur, hier in im Deckelelement 32 gebildete Fenster 36, eingreifen.

Das Deckelelement 32 weist Mittel 34 (Fig. 3, Fig. 5) zum unverlierbaren Halten von Klemmschrauben 18 auf. Die Mittel 34 zum unverlierbaren Halten können zum Beispiel so ausgeführt sein, wie dies in der DE 20 2010 005 216 U vom 15.04.2010 beschrieben ist. Die dortige Beschreibung der unverlierbaren Halterung von Klemmschrauben soll zur Vermeidung von unnötigen Wiederholungen durch diesen Verweis als in die hier vorgelegte Beschreibung aufgenommen gelten. Die unverlierbare Halterung von Klemmschrauben 18 in einem Deckelelement 32 erlaubt die gleichzeitige Positionierung mehrerer Klemmschrauben 18 über den in der Erdungsschiene 12 gebildeten Klemmschraubenbohrungen. Diese gleichzeitige Positionierung ergibt sich für alle von einem Deckelelement 32 gehaltenen Klemmschrauben 18 mit dem Verbinden des Deckelelements 32 mit der Erdungsschienenvorrichtung 10, also zum Beispiel mit dem Verbinden eines Deckelelements 32 mit einem Sockel 14.

Dies erleichtert das Bestücken einer Erdungsschiene 12 mit Klemmschrauben 18. Bei der in den Figuren gezeigten Ausführungsform (Fig. 5) ist das Verbinden eines Deckelelements 32 mit der Erdungsschienenvorrichtung 10 auch im Falle von bereits in die Erdungsschiene 12 eingedrehten Klemmschrauben 18 möglich. Dafür weist das Deckelelement 32 in seinem Innern unterhalb der Mittel 34 zum unverlierbaren Halten von Klemmschrauben 18 eine lichte Höhe auf, die bei einem mit der Erdungsschienenvorrichtung 10 verbundenen Deckelelement 32 eine Aufnahme von in die Erdungsschiene 12 eingeschraubten Klemmschrauben 18 erlaubt (Fig. 5).

Die Darstellung in Figur 4 und speziell die Darstellung in Figur 12 zeigen auch, dass jeweils zwei Deckelelemente 32 mittels eines Anreihprofils, zum Beispiel mittels eines Schwalbenschwanzprofils (Figur 12), verbindbar sind. Während die Darstellung in Figur 4 insoweit eher eine Momentaufnahme beim Anbringen von Deckelelementen 32 zeigt, ist in den Figuren 7 und 8 eine Konfiguration mit angebrachten Deckelelementen 32 gezeigt. Mehrere Deckelelemente 32, hier drei Deckelelemente 32, sind mittels des Anreihprofils verbunden und die jeweils äußeren Deckelelemente 32 sind mit den die Erdungsschiene 12 tragenden Sockeln 14 verrastet. Das in der Darstellung mittlere Deckelelement 32 oder jedes zwischen zwei jeweils mit einem Sockel 14 verrasteten Deckelelementen 32 befindliche Deckelelement 32 ist in der resultierenden Kette (Reihung) mittels des Anreihprofils gehalten.

Die Darstellung in Figur 8 zeigt zusätzlich einen äußeren seitlichen Abschluss der Deckelelemente 32 mittels zweier Seitenteile 38. Die Seitenteile 38 sind unter Verwendung des zum Anreihen von Deckelelementen 32 vorgesehenen Anreihprofils mit dem jeweiligen Deckelelement 32 verbunden. Die Darstellung in Figur 9 zeigt die Erdungsschienenvorrichtung 10 aus Figur 1 in einer Seitenansicht aus einer Richtung quer zur Längsachse der Erdungsschiene 12. Die Darstellungen in Figur 10, 11 und 12 zeigen die Erdungsschienenvorrichtung 10 aus anderen Blickwinkeln, nämlich in einer Seitenansicht aus einer Blickrichtung parallel zur Längsachse der Erdungsschiene 12 (Fig. 10, Fig. 11), einmal ohne Seitenteil 38 (Fig. 10) und einmal mit Seitenteil 38 (Fig. 11) sowie in einer Ansicht von oben (Fig. 12).

Damit lässt sich die hier vorgelegte Beschreibung kurz wie folgt zusammenfassen: Es wird eine Erdungsschienenvorrichtung 10 mit einer Erdungsschiene 12 mit einer grundsätzlich beliebigen Länge, nämlich einer aufgrund einer grundsätzlich beliebigen Anzahl von Leitereinführöffnungen 16 resultierenden Länge, und zumindest einem, die Erdungsschiene 12 tragenden Sockel 14 angegeben, wobei Zentrierungsmittel 28, 30 der Erdungsschiene 12 und des oder jedes Sockels 14 eine Zugänglichkeit auch von im Bereich eines Sockels 14 befindlichen Leitereinführöffnungen 16 der Erdungsschiene 12 gewährleisten, indem aufgrund der Zentrierungsmittel 28, 30 jederzeit jede im Sockel 14 zum Einführen elektrischer Leiter bestimmte seitliche Öffnung 26 mit einer Leitereinführöffnung 16 der Erdungsschiene 12 fluchtet.

### Bezugszeichenliste

- 10: Erdungsschienenvorrichtung
- 12: Erdungsschiene
- 14: Sockel
- 16: Leitereinführöffnung
- 18: Klemmschraube
- 20: Steg (des Sockels)
- 22: Ausnehmung (im Sockel)
- 24: Wandelement (des Sockels)
- 26: Öffnung (im Wandelement)
- 28: Zentrierungsmittel, Rille
- 30: Zentrierungsmittel, Rippe
- 32: Deckelelement
- 34: Mittel zum unverlierbaren Halten von Klemmschrauben
- 36: Fenster (im Deckelteil)
- 38: Seitenteil

## Patentansprüche

1. Erdungsschienenvorrichtung (10) mit einer Erdungsschiene (12) und zumindest einem, die Erdungsschiene (12) tragenden Sockel (14),
wobei die Erdungsschiene (12) entlang ihrer Längserstreckung nebeneinander eine Mehrzahl von jeweils quer zur Längserstreckung orientierten Leitereinführöffnungen (16) aufweist
wobei der Sockel (14) zur Aufnahme eines Abschnitts der Erdungsschiene (12) eine formschlüssig auf eine Querschnittskontur der Erdungsschiene (12) abgestellte Ausnehmung (22) aufweist,
wobei die Ausnehmung (22) beidseitig durch Wandelemente (24) begrenzt ist,
wobei zumindest eines der Wandelemente (24) zumindest eine Öffnung (26) aufweist,
wobei die Wandelemente (24) zur rastenden Arretierung der Erdungsschiene (12) in der Ausnehmung (22) wirksam sind,
**dadurch gekennzeichnet,**
**dass** die Ausnehmung (22) und die Erdungsschiene (12) korrespondierende Zentrierungsmittel (28, 30) aufweisen und dass bei einer in der Ausnehmung (22) eines Sockels (14) platzierten Erdungsschiene (12) und bei in Eingriff befindlichen Zentrierungsmitteln (28, 30) die zumindest eine Öffnung (26) des Wandelements (24) mit einer Leitereinführöffnung (16) der Erdungsschiene (12) fluchtet.

2. Erdungsschienenvorrichtung (10) nach Anspruch 1, wobei mit einem Sockel (14) ein Deckelelement (32) rastend verbindbar ist und wobei das Deckelelement (32) Mittel (34) zum unverlierbaren Halten von Klemmschrauben (18) aufweist, die zum Eindrehen in Klemmschraubenbohrungen der Erdungsschiene (12) bestimmt sind.

3. Erdungsschienenvorrichtung (10) nach Anspruch 2, wobei das Deckelelement (32) in seinem Innern unterhalb der Mittel (34) zum unverlierbaren Halten von Klemmschrauben (18) eine lichte Höhe aufweist, die bei einem mit der Erdungsschienenvorrichtung (10) verbundenen Deckelelement (32) eine Aufnahme von in die Erdungsschiene (12) eingeschraubten Klemmschrauben (18) erlaubt.

4. Erdungsschienenvorrichtung (10) nach Anspruch 2 oder 3, wobei jeweils zwei Deckelelemente (32) mittels eines Anreihprofils lösbar miteinander verbindbar sind.

5. Erdungsschienenvorrichtung (10) nach einem der Ansprüche 2 bis 4, wobei das oder jedes direkt oder indirekt mit einem Sockel (14) verbundene Deckelelement (32) die Erdungsschiene (12) fingersicher umfasst.
